**Europäisches Patentamt**

**European Patent Office**

**Office européen des brevets**

(19)

(11) Veröffentlichungsnummer: **0 189 551**
**B1**

(12)

# EUROPÄISCHE PATENTSCHRIFT

(45) Veröffentlichungstag der Patentschrift:
**26.10.88**

(51) Int. Cl.⁴: **G 01 N 21/89**

(21) Anmeldenummer: **85115168.8**

(22) Anmeldetag: **29.11.85**

(54) **Verfahren und Vorrichtung zum Prüfen von transparenten Materialbahnen, insbesondere Flachglasbändern.**

(30) Priorität: **14.12.84 DE 3445580**

(43) Veröffentlichungstag der Anmeldung:
**06.08.86 Patentblatt 86/32**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**EP - A - 0 060 160**
**EP - A - 0 071 257**
**DE - A - 2 556 395**
**FR - A - 2 078 535**
**US - A - 3 652 863**

**MESURES REGULATION AUTOMATISME, Band 43, Nr. 5, Mai 1978, Seiten 43-50, C.F.E., Paris, FR; D. BARD "Contrôle de surfaces par rayon laser" GLASTECHNISCHE BERICHTE, Band 50, Nr. 11, 1977, Seiten 296-300, D.G.G. Verlag, Frankfurt; R. WAGNER "Inclusions de sulfure de nickel dans le verre"**

(73) Patentinhaber: **FLACHGLAS AKTIENGESELLSCHAFT, Otto-Seeling-Promenade 10-14, D-8510 Fürth (DE)**

(72) Erfinder: **Bartelsen, Lutz, Dr. Dipl.-Phys., Leege Heide 50, D-4231 Hamminkeln (DE)**

(74) Vertreter: **Goddar, Heinz J., Dr. et al, FORRESTER & BOEHMERT Widenmayerstrasse 4/l, D-8000 München 22 (DE)**

## Beschreibung

Die Erfindung betrifft ein Verfahren zum Prüfen von transparenten Materialbahnen, insbesondere Flachglasbändern oder dergleichen, auf Materialfehler, bei dem das in seiner Längsrichtung transportierte Glasband oder dergleichen über seine Breite in einer senkrecht zu seiner Transportebene und senkrecht zu seiner Transportrichtung liegenden Scanebene mit einem lasererzeugten fliegenden Lichtpunkt abgetastet, die durch die Einschlüsse erzeugte Vorwärts- und Rückwärts-Streustrahlung in jeweils einer zur Scanebene geneigten Detektionsebene gemessen, aus den erhaltenen Messwerten elektrische Signale abgeleitet und diese zur Materialfehleridentifizierung verarbeitet werden, sowie eine Vorrichtung zum Prüfen von transparenten Materialbahnen, insbesondere Flachglasbändern oder dergleichen, auf Materialfehler, mit einer auf einer Seite des in seiner Längsrichtung transportierten Glasbandes oder dergleichen angeordneten Lichtpunktquelle zur Erzeugung eines das Glasband über seine Breite in einer senkrecht zu seiner Transportebene und senkrecht zu seiner Transportrichtung liegenden Scanebene abtastenden lasererzeugten fliegenden Lichtpunktes sowie beidseits des Glasbandes oder dergleichen angeordneten Detektoren zum Erfassen der durch die Einschlüsse erzeugten Vorwärts- bzw. Rückwärts-Streustrahlung in jeweils einer zur Scanebene geneigten Detektionsebene.

Nickelsulfideinschlüsse in vorgespannten Glasplatten können unter bestimmten Voraussetzungen zu Spontanbrüchen führen (Glastechn. Ber. 50 (1977) Nr. 11, S. 296–300), wodurch insbesondere bei Fassadenverglasungen eine nicht unerhebliche Gefährdung von Menschen hervorgerufen werden kann. Um die Verwendung derartiger fehlerhafter Glasplatten zu vermeiden, ist es bislang üblich, einen sogenannten «heat-soaktest» einzusetzen, bei dem die Glasplatten nach dem Vorspannen einer geeigneten Wärmebehandlung unterzogen werden, wodurch die den Brüchen zugrundeliegende Phasenumwandlung der NiS-Einschlüsse vorab erzwungen werden soll. Die diesen Test unzerstört überstehenden Glasplatten können dann mit erheblich gesteigerter Bruchsicherheit für die Bauverglasung eingesetzt werden. Das vorgenannte Selektionsverfahren ist jedoch insbesondere aus wirtschaftlichen Erwägungen aus naheliegenden Gründen unbefriedigend.

Aus der GB-PS 13 38 611 sind bereits ein Verfahren sowie eine Vorrichtung der eingangs genannten Art zum Prüfen von Glasbändern bekannt, bei dem beispielsweise aus Floatglasanlagen kontinuierlich abgezogene Glasbänder auf Materialfehler untersucht werden können. Grundsätzlich ist es mittels dieses bekannten Verfahrens auch möglich, bei entsprechender hochempfindlicher Einstellung NiS-Einschlüsse zu erkennen, jedoch lassen sich diese nicht von anderen Glasfehlern, insbesondere Steinchen, unterscheiden. Auch ähnlich arbeitende Glasprüfeinrichtungen dieser Art, wie sie beispielsweise aus der DE-PS 31 29 808 bekannt sind, ermöglichen bei hochempfindlicher Einstellung zwar den Nachweis u.a. von NiS-Einschlüssen, ohne dass diese aber von anderen Glasfehlern, insbesondere Steinchen, unterschieden werden könnten, so dass insgesamt die vorbeschriebenen Verfahren sich nicht dazu eignen, ausschliesslich mit NiS-Einschlüssen behaftete und daher fehlerhafte Glasplatten auszusondern, da in diesem Fall auch solche Glasplatten ausgeschieden werden, die Fehler aufweisen, welche nicht zu den geschilderten Spontanbrüchen führen, wodurch ein unnötig hoher Ausschuss verworfen würde.

Der Erfindung liegt daher die Aufgabe zugrunde, ein Verfahren sowie eine Vorrichtung der gattungsgemässen Art zu schaffen, welche im Verhältnis zu den bisher bekannten Verfahren und Vorrichtungen eine verbesserte Diskriminierung der aufgefundenen Fehler nach Art und Grösse gestatten und insbesondere die Möglichkeit geben, NiS-Einschlüsse von anderen Glasfehlern zu unterscheiden.

Erfindungsgemäss wird diese Aufgabe bei einem Verfahren der gattungsgemässen Art dadurch gelöst, dass als Lichtpunktquelle ein im nahen IR-Bereich arbeitender Laser verwendet wird.

Dabei kann vorgesehen sein, dass ein Laser mit einer Wellenlänge von ca. 1060 nm verwendet wird.

Ferner sieht die Erfindung gegebenenfalls vor, dass ein YAG-Laser mit einer Wellenlänge von 1060 nm verwendet wird.

Das erfindungsgemässe Verfahren sieht gegebenenfalls vor, dass der Winkel zwischen Scanebene und Detektionsebene ca. 5–45° beträgt.

Auch kann vorgesehen sein, dass der Winkel zwischen Scanebene und Detektionsebene ca. 5–15° beträgt.

Erfindungsgemäss wird weiterhin gegebenenfalls vorgeschlagen, dass der Winkel zwischen Scanebene und Detektionsebene ca. 10° beträgt.

Weiterhin kann das erfindungsgemäss vorgesehene Verfahren dadurch gekennzeichnet sein, dass aus Vorwärts- und Rückwärts-Streustrahlung ein Differenzsignal gebildet und dieses zur Materialfehlerdiskriminierung ausgewertet wird.

Die durch die Erfindung vorgeschlagene Vorrichtung, insbesondere zur Durchführung des beanspruchten Verfahrens, ist dadurch gekennzeichnet, dass als Lichtpunktquelle ein im nahen IR-Bereich arbeitender Laser vorgesehen ist.

Dabei kann vorgesehen sein, dass als Lichtpunktquelle ein YAG-Laser mit einer Wellenlänge von 1060 nm vorgesehen ist.

Auch kann eine Einrichtung zum Bilden eines Differenzsignales aus Vorwärts- und Rückwärts-Streustrahlung und Auswertung desselben zur Fehlerdiskriminierung vorgesehen sein.

Dabei kann vorgesehen sein, dass der Winkel zwischen Scanebene (32) und Detektionsebene (30) ca. 5–45° beträgt.

Ferner kann vorgesehen sein, dass der Winkel zwischen Scanebene (32) und Detektionsebene (30) ca. 5–15° beträgt.

Schliesslich kann die erfindungsgemässe Vorrichtung auch dadurch gekennzeichnet sein, dass der Winkel zwischen Scanebene (32) und Detektionsebene (30) ca. 10° beträgt.

Dadurch, dass bei der Erfindung ein Laser im nahen IR-Bereich verwendet, die Vorwärts- und Rückwärts-Streustrahlung in Winkeln von etwa 10° bzw. 170°, von der Einstrahlrichtung des Lichtpunktes gesehen, aufgefangen und schliesslich das Differenzsignal von Vorwärts- und Rückwärts-Streustrahlung elektronisch ausgewertet wird, gelingt es, Glasfehler nach Art und Grösse einwandfrei zu diskriminieren, wobei insbesondere wegen der deutlichen Bevorzugung der Rückwärtsrichtung bei der durch NiS-Einschlüsse hervorgerufenen Streustrahlung unter den vorstehend genannten Bedingungen derartige Einschlüsse einwandfrei diskriminiert werden können. NiS-Einschlüsse lassen sich von anderen, üblichen Glasfehlern einwandfrei unterscheiden, indem in der erfindungsgemäss vorgesehenen Weise der in Infrarot arbeitende Laser verwendet wird, da das Reflexionsvermögen von NiS im Bereich von 0,5–2,5 µm von ca. 40% auf ca. 85% ansteigt, wobei es sich empfiehlt, einen YAG-Laser mit einer Wellenlänge von 1060 nm (NiS-Reflexionsvermögen ca. 80%) einzusetzen, da ja die benutzte Wellenlänge im Bereich hoher Transmission des Glases liegen muss und derartige Laser ohne besondere technische Schwierigkeiten zur Verfügung gestellt werden können. Bei der vorgenannten Wellenlänge hat das Differenzsignal des NiS das umgekehrte Vorzeichen wie das anderer, insbesondere bei Floatglas auftretender Glasfehler, so dass NiS einwandfrei gegenüber anderen Glasfehlern unterschieden werden kann. Die Vorrichtung nach der Erfindung kann bei der Durchführung des erfindungsgemässen Verfahrens im übrigen Materialfehler klar von auf der Glasoberfläche gegebenenfalls vorhandenen üblichen Glasverunreinigungen, wie Staubteilchen oder dergleichen, unterscheiden, so dass das Flachglasband bzw., allgemeiner, die transparente Materialbahn vor der Durchführung des Prüfvorganges keiner besonders aufwendigen Reinigung unterzogen werden muss.

Weitere Merkmale und Vorteile der Erfindung geben sich aus der nachfolgenden Beschreibung, in der ein Ausführungsbeispiel anhand der Zeichnung im einzelnen erläutert ist. Dabei zeigt:

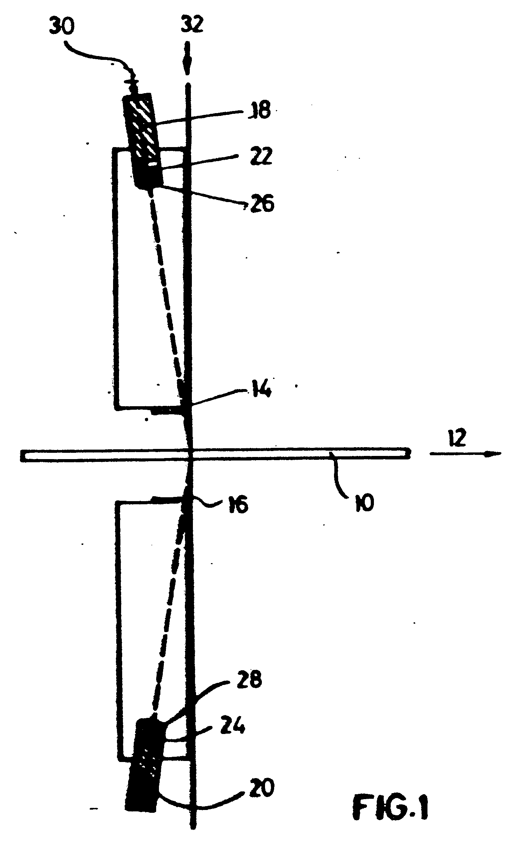

Fig. 1 ein Ausführungsbeispiel einer Vorrichtung nach der Erfindung im Schnitt parallel zur Transportrichtung des zu untersuchenden Glasbandes; und

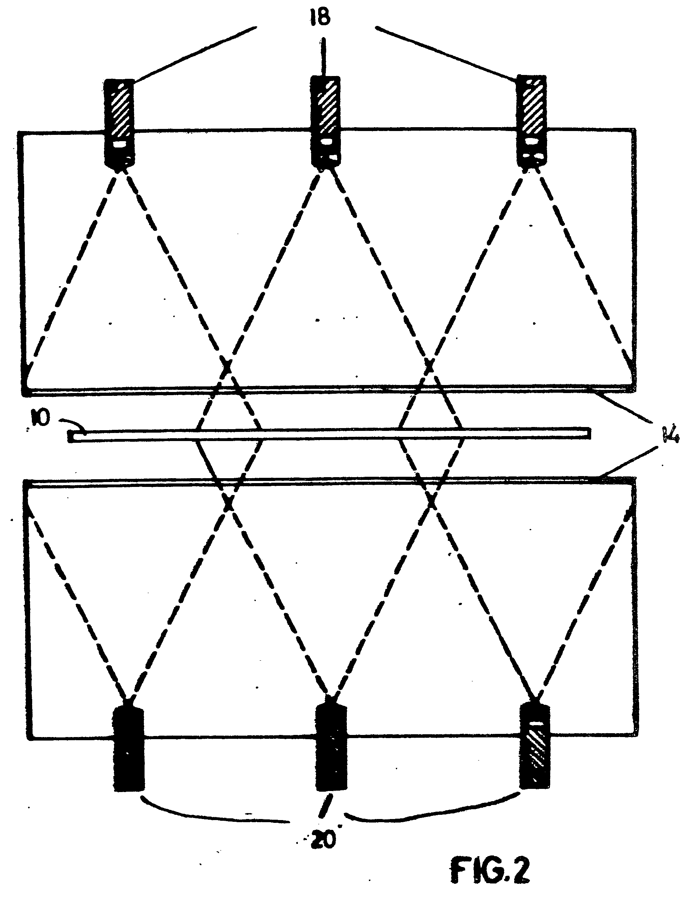

Fig. 2 einen Schnitt senkrecht zur Detektionsebene 30 von Fig. 1.

Wie die Zeichnung erkennen lässt, weist die bei dem gezeigten Ausführungsbeispiel verwendete Vorrichtung oberhalb und unterhalb des Floatglasbandes 10, welches in Richtung des Pfeiles 12 transportiert wird, jeweils einen mit Streuscheibe abgedeckten Spalt 14 bzw. 16, auf, wobei die Streuscheiben bzw. Spalte 14, 16 mittels Detektoren (Photomultipliern) 18, 20 abgetastet werden, denen Filter 22, 24 sowie Abbildungsoptiken 26, 28 vorgeschaltet sind. Die Detektionsebene 30, in der die Detektoren 18 angeordnet sind, ist dabei um einen Winkel von ca. 10 °C gegenüber der Scanebene 32, in der der lasererzeugte Lichtpunkt auf das Glasband 10 gerichtet wird, geneigt, wobei derselbe Winkel auch zwischen der Detektionsebene der unterhalb des Glasbandes 10 angeordneten Detektoren 20 und der Scanebene eingestellt ist.

Die vorstehend beschriebene Vorrichtung arbeitet bei dem gezeigten Ausführungsbeispiel wie folgt:

Das zu prüfende Glasband 10 wird in der senkrecht zum Glasband 10 und senkrecht zur Glastransportrichtung 12 liegenden Scanebene mit einem Laserstrahl abgetastet, wobei die Scaneinheit aus einem YAG-Laser mit einer Wellenlänge von 1060 nm sowie einem rotierenden Polygonspiegel besteht. Das von einem vom Laserstrahl getroffenen Glasfehler gestreute Licht wird in Vorwärts- und Rückwärtsrichtung in den gegen die Scanebene 32 um jeweils kleine Winkel, nämlich bei dem gezeigten Ausführungsbeispiel 10°, geneigten Detektionsebenen 30 mittels der beiden Reihen von Detektoren 18, 20 detektiert, die in einer Parallelen zur Abtastlinie oberhalb und unterhalb des Glasbandes 10 angeordnet sind. Das Differenzsignal von Vorwärts- und Rückwärtsdetektoren wird ausgewertet, wobei sich NiS-Einschlüsse einwandfrei von anderen Glasfehlern unterscheiden lassen, da das Differenzsignal des NiS bei der verwendeten Wellenlänge von 1060 nm das umgekehrte Vorzeichen wie das der anderen bei Floatglas vorkommenden Glasfehler hat.

Bezugszeichenliste
10 Glasband
12 Glastransportrichtung (Pfeil)
14 mit Streuscheibe abgedeckter Spalt
16 mit Streuscheibe abgedeckter Spalt
18 Detektor
20 Detektor
22 Filter
24 Filter
26 Abbildungsoptik
28 Abbildungsoptik
30 Detektionsebene
32 Scanebene

## Patentansprüche

1. Verfahren zum Prüfen von transparenten Materialbahnen, insbesondere Flachglasbändern oder dergleichen, auf Materialfehler, bei dem das in seiner Längsrichtung transportierte Glasband oder dergleichen über seine Breite in einer senkrecht zu seiner Transportebene und senkrecht zu seiner Transportrichtung liegenden Scanebene mit einem lasererzeugten fliegenden Lichtpunkt abgetastet, die durch die Einschlüsse erzeugte Vorwärts- und Rückwärts-Streustrahlung in jeweils einer zur Scanebene geneigten Detektionsebene gemessen, aus den erhaltenen Messwerten elektrische Signale abgeleitet und diese zur Materialfehleridentifizierung verarbeitet werden, dadurch gekennzeichnet, dass zum Erkennen von NiS-Einschlüssen als Lichtpunktquelle ein im nahem IR-Bereich arbeitender Laser verwendet wird.

2. Verfahren nach Anspruch 1, dadurch gekennzeichnet, dass ein Laser mit einer Wellenlänge von ca. 1060 nm verwendet wird.

3. Verfahren nach Anspruch 2, dadurch gekennzeichnet, dass ein YAG-Laser mit einer Wellenlänge von 1060 nm verwendet wird.

4. Verfahren nach einem der vorangehenden Ansprüche, dadurch gekennzeichnet, dass der Winkel zwischen Scanebene und Detektionsebene ca. 5–45° beträgt.

5. Verfahren nach Anspruch 4, dadurch gekennzeichnet, dass der Winkel zwischen Scanebene und Detektionsebene ca. 5–15° beträgt.

6. Verfahren nach Anspruch 5, dadurch gekennzeichnet, dass der Winkel zwischen Scanebene und Detektionsebene ca. 10° beträgt.

7. Verfahren nach einem der vorangehenden Ansprüche, dadurch gekennzeichnet, dass aus Vorwärts- und Rückwärts-Streustrahlung ein Differenzsignal gebildet und dieses zur Materialfehlerdiskriminierung ausgewertet wird.

8. Vorrichtung zum Prüfen von transparenten Materialbahnen, insbesondere Flachglasbändern oder dergleichen, auf Materialfehler, mit einer auf einer Seite des in seiner Längsrichtung transportierten Glasbandes oder dergleichen angeordneten Lichtpunktquelle zur Erzeugung eines das Glasband über seine Breite in einer senkrecht zu seiner Transportebene und senkrecht zu seiner Transportrichtung liegenden Scanebene abtastenden lasererzeugten fliegenden Lichtpunktes sowie beidseits des Glasbandes oder dergleichen angeordneten Detektoren zum Erfassen der durch die Einschlüsse erzeugten Vorwärts- bzw. Rückwärts-Streustrahlung in jeweils einer zur Scanebene geneigten Detektionsebene, insbesondere zur Durchführung des Verfahrens nach einem der vorangehenden Ansprüche, dadurch gekennzeichnet, dass zum Erkennen von NiS-Einschlüssen als Lichtpunktquelle ein im nahem IR-Bereich arbeitender Laser vorgesehen ist.

9. Vorrichtung nach Anspruch 8, dadurch gekennzeichnet, dass als Lichtpunktquelle ein YAG-Laser mit einer Wellenlänge von 1060 nm vorgesehen ist.

10. Vorrichtung nach Anspruch 8 oder 9, gekennzeichnet durch eine Einrichtung zum Bilden eines Differenzsignales aus Vorwärts- und Rückwärts-Streustrahlung und Auswertung desselben zur Fehlerdiskriminierung.

11. Vorrichtung nach einem der Ansprüche 8 bis 10, dadurch gekennzeichnet, dass der Winkel zwischen Scanebene (32) und Detektionsebene (30) ca. 5–45 °C beträgt.

12. Vorrichtung nach Anspruch 11, dadurch gekennzeichnet, dass der Winkel zwischen Scanebene (32) und Detektionsebene (30) ca. 5–15° beträgt.

13. Vorrichtung nach Anspruch 12, dadurch gekennzeichnet, dass der Winkel zwischen Scanebene (32) und Detektionsebene (30) ca. 10° beträgt.

**Revendications**

1. Procédé pour l'essai de bandes de matière transparente, en particulier de feuilles de verre plat ou analogue, en ce qui concerne les défauts de matière, dans lequel on explore avec un spot mobile produit par laser la feuille de verre, ou analogue, transportée dans sa direction longitudinale, sur sa largeur, dans un plan de balayage perpendiculaire à son plan de transport et perpendiculaire à sa direction de transport, on mesure, dans un plan de détection incliné par rapport au plan de balayage, le rayonnement diffusé vers l'avant et vers l'arrière et produit par les inclusions, on dérive des valeurs de mesure obtenues des signaux électriques que l'on traite pour l'identification des défauts de matière, caractérisé par le fait que l'on utilise comme source du spot, pour reconnaître des inclusions NiS, un laser opérant dans une zone voisine de l'IR.

2. Procédé selon la revendication 1, caractérisé par le fait que l'on utilise un laser d'une longueur d'onde d'environ 1060 nm.

3. Procédé selon la revendication 2, caractérisé par le fait que l'on utilise un laser YAG d'une longueur d'onde de 1060 nm.

4. Procédé selon l'une des revendications précédentes, caractérisé par le fait que l'angle entre le plan de balayage et le plan de détection est d'environ 5–45°.

5. Procédé selon la revendication 4, caractérisé par le fait que l'angle entre le plan de balayage et le plan de détection est d'environ 5–15°.

6. Procédé selon la revendication 5, caractérisé par la fait que l'angle entre le plan de balayage et le plan de détection est d'environ 10°.

7. Procédé selon l'une des revendications, caractérisé par le fait que le rayonnement diffusé vers l'avant et vers l'arrière forme un signal différentiel qui est exploité pour la discrimination des défauts de matière.

8. Dispositif pour l'essai de bandes de matière transparente, en particulier de feuilles de verre plat ou analogue, en ce qui concerne les défauts de matière, comprenant une source de spot disposée d'un côté de la feuille de verre ou analogue, transportée dans sa direction longitudinale, pour obtenir un spot mobile produit par laser explorant la feuille de verre sur sa largeur, dans un plan de balayage perpendiculaire à son plan de transport et perpendiculaire à son plan de transport et perpendiculaire à sa sirection de transport, ainsi que des détecteurs disposes des deux côtés de la feuille de verre, ou analogue, pour détecter, dans un plan de détection incliné par rapport au plan de balayage, le rayonnement diffusé vers l'avant et vers l'arrière et produit par les inclusions, en particulier pour mettre en œuvre le procédé selon l'une des revendications précédentes caractérisé par le fait qu'il est prévu comme source du spot, pour reconnaître des inclusions NiS, un laser opérant dans une zone voisine de l'IR.

9. Dispositif selon la revendication 8, caractérisé par le fait qu'il est prévu, comme source de spot, un laser YAG d'une longueur d'onde de 1060 nm.

10. Dispositif selon la revendication 8 ou 9, caractérisé par un moyen de formation d'un signal différentiel à partir du rayonnement diffus vers l'avant et vers l'arrière et d'exploitation de celui-ci pour la discrimination des défauts.

11. Dispositif selon l'une des revendications 8 à 10, caractérisé par le fait que l'angle entre le plan de balayage et le plan de détection est d'environ 5–45°.

12. Dispositif selon la revendication 11, caractérisé par le fait que l'angle entre le plan de balayage et le plan de détection est d'environ 5–15°.

13. Dispositif selon la revendication 12, caractérisé par le fait que l'angle entre le plan de balayage et le plan de détection est d'environ 10°.

## Claims

1. A method of testing transparent sheets of material, more particularly sheet glass strips or the like, for material faults wherein the glass strip or the like being conveyed lengthwise is scanned by a laser-produced flying light dot in a scanning plane perpendicular to the plane of glass strip conveyance and to the direction thereof, the forwards and backwards scatter radiation produced by the inclusions is measured in a respective detection plane inclined relatively to the scanning plane and electrical signals are derived from the measured values found and processed for identification of material errors, characterised in that to detect inclusions of NiS a laser operating in the near IR-range is used as light dot source.

2. A method according to claim 1, characterised in that a laser having a wave length of approximately 1060 nM is used.

3. A method according to claim 2, characterised in that a YAG laser having a wave length of 1060 nM is used.

4. A method according to any of the previous claims, characterised in that the angle between the scanning plane and the detection plane is approximately 5 to 45°.

5. A method according to claim 4, characterised in that the angle between the scanning plane and the detection plane is approximately 5 to 15°.

6. A method according to claim 5, characterised in that the angle between the scanning plane and the detection plane is approximately 10°.

7. A method according to any of the previous claims, characterised in that a difference signal is formed from the forwards scatter radiation and backwards scatter radiation and evaluated for discrimination of material errors.

8. An apparatus for testing transparent material sheets, more particularly flat glass strips or the like, for material faults, the apparatus comprising a light dot source disposed on one side of the glass strip or the like, the same being conveyed lengthwise, to produce a laser-produced flying light dot which scans the glass strip over its width in a scanning plane which is perpendicular to the plane of strip conveyance and to the direction thereof, detectors being disposed on either side of the glass strip or the like to detect, in a detection plane at an inclination to the scanning plane, the forwards scatter radiation and backwards scatter radiation produced by the inclusions, more particularly for performing the method according to any of the previous claims characterised in that to detect inclusions of NiS a laser operating in the near IR range is provided as light dot source.

9. An apparatus according to claim 8, characterised in that a YAG laser having a wave length of 1060 nm is provided as light dot source.

10. An apparatus according to claim 8 or 9, characterised by means for forming a difference signal from the forwards scatter radiation and backwards scatter radiation and evaluating such signal for fault discrimination.

11. An apparatus according to any of claims 8 to 10, characterised in that the angle between the scanning plane (32) and detection plane (30) is approximately 5 to 45°.

12. An apparatus according to claim 11, characterised in that the angle between the scanning plane (32) and the detection plane (30) is approximately 5 to 15°.

13. An apparatus according to claim 12, characterised in that the angle between the scanning plane (32) and the detection plane (30) is approximately 10°.

FIG.1

FIG.2